# FASCICULE DE BREVET EUROPEEN

(11) **EP 0 451 672 B1**
(45) Date de publication et mention de la délivrance du brevet: **29.12.1993**
(21) Numéro de dépôt: 91105206.6
(22) Date de dépôt: 02.04.1991
(51) Int. Cl.: A47J 31/54

(54) **Cafetière ménagère**
Haushaltskaffeemaschine
Coffee machine for domestic use

(30) Priorité: 11.04.1990 FR 9004679
(43) Date de publication de la demande: 16.10.1991
(73) Titulaire: MOULINEX, F-93170 Bagnolet (FR)
(72) Inventeur: Schiettecatte, Patrice Jean Cornelius, F-60000 Alençon (FR)
(74) Mandataire: May, Hans Ulrich, Dr.

(56) Documents cités:
- EP-A- 0 106 905
- EP-A- 0 361 073
- DE-B- 1 166 988
- DE-B- 2 722 548
- DE-U- 8 708 083
- US-A- 4 875 408

## Description

L'invention se rapporte aux cafetières ménagères comportant un réservoir d'eau froide alimentant un chauffe-eau du type à circulation dont la sortie est reliée à une goulotte d'arrosage d'un filtre à café disposé au-dessus d'un collecteur d'infusion, ledit chauffe-eau comprenant une résistance chauffante dont le circuit d'alimentation est branché aux bornes d'une source de tension alternative.

Dans les cafetières de ce genre, la résistance est alimentée à une puissance constante de manière que le chauffe-eau délivre, le plus rapidement possible, de l'eau chaude à un débit constant. Malheureusement, avec une telle méthode, on ne peut obtenir un café ayant un goût fort ou corsé, du fait que la mouture n'a pas le temps de "gonfler" et de donner ainsi tout son arôme.

Pour remédier à ces inconvénients, on a proposé, comme cela est décrit dans le document DE-A-2 722 548, d'équiper la cafetière d'un système de temporisation occupant un état ouvert ou fermé afin de déterminer une phase de prétrempage et une phase d'infusion permettant d'obtenir un café ayant tout son arôme. Toutefois, entre ces deux phases, le système de temporisation interrompt le débit d'eau pendant un temps déterminé, de sorte qu'on n'obtient pas dans un temps rapide un "bon" café.

Par ailleurs, il est connu d'après le document EP-A-361 073 d'associer la résistance chauffante à deux étages de puissance comportant une diode servant à changer la puissance de chauffage.

L'invention a pour but de réaliser une cafetière fonctionnant à forte puissance et procurant, dans un temps rapide, un café corsé en apportant une modification simple et économique au circuit d'alimentation de la résistance chauffante.

Selon l'invention, une cafetière ménagère du type décrit précédemment et comportant un élément de temporisation déterminant les phases de prétrempage et d'infusion par un état ouvert ou fermé, est plus particulièrement caractérisée en ce que le circuit d'alimentation de la résistance comporte un dispositif de changement de la puissance électrique fournie à ladite résistance chauffante de manière à alimenter, en fonction de l'état ouvert ou fermé de l'élément de temporisation, ladite résistance, dans la phase de prétrempage, à une faible puissance pour obtenir un faible débit d'eau chaude, et dans la phase successive d'infusion, à une puissance supérieure pour obtenir un fort débit d'eau chaude.

Ainsi, on comprend qu'en faisant varier la puissance de la résistance du chauffe-eau à circulation au cours des deux phases successives, on obtient une modification du débit d'eau à sa sortie, et ce avec un écoulement continu.

Les caractéristiques et avantages de l'invention ressortiront d'ailleurs de la description qui va suivre, à titre d'exemple, en référence au dessin annexé dans lequel :

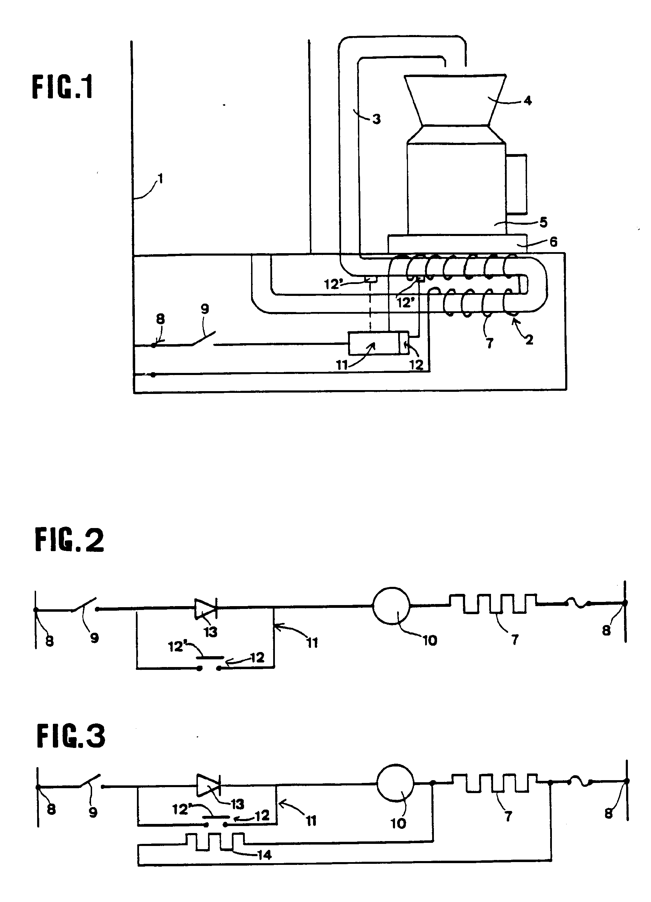

la figure 1 est une vue schématique d'une cafetière comportant un circuit d'alimentation selon l'invention ; la figure 2 est un schéma électrique du circuit d'alimentation de la résistance de la cafetière ; la figure 3 est une variante du schéma électrique du circuit d'alimentation de la résistance.

La cafetière représentée à la figure 1 comporte un réservoir 1 d'eau froide alimentant un chauffe-eau 2 du type à circulation dont la sortie est reliée à une goulotte d'arrosage 3 d'un filtre à café 4 disposé au dessus d'un collecteur d'infusion 5 reposant sur une plaque 6 solidaire dudit chauffe-eau, ledit chauffe-eau comprenant une résistance chauffante 7 dont le circuit d'alimentation est branché aux bornes 8 d'une source de tension alternative telle que le réseau électrique 110 ou 220 Volts. Le circuit d'alimentation comprend, de façon connue en soi, un interrupteur de fonctionnement 9 et un thermostat 10 de régulation de la température de l'eau chaude montés en série avec ladite résistance de chauffage 7.

Selon l'invention, le circuit d'alimentation de la résistance 7 comporte un dispositif 11 de changement de la puissance électrique fournie à ladite résistance chauffante 7 de manière à alimenter ladite résistance, dans une première phase dite de prétrempage, à une faible puissance pour obtenir un faible débit d'eau chaude, et dans une seconde phase dite d'infusion, à une puissance supérieure pour obtenir un fort débit d'eau chaude.

De manière à assurer le fonctionnement automatique de la cafetière, le dispositif de changement de la puissance comporte un élément de temporisation 12 afin de déterminer les phases de prétrempage et d'infusion.

Une façon simple et économique de réaliser le dispositif de changement de la puissance est, d'une part, d'utiliser une diode 13 montée en série dans le circuit d'alimentation de la résistance chauffante 7, et d'autre part, de brancher l'élément de temporisation 12 en parallèle aux bornes de la diode 13, l'élément de temporisation 12 pouvant occuper soit un état ouvert pour lequel l'alimentation de la résistance 7 se fait au travers de la diode 13, soit un état fermé pour lequel il shunte ladite diode.

Selon un mode de réalisation préférée (schématisée à la figure 2) l'élément de temporisation 12 est un interrupteur commandé par un élément sensible à la température 12' du type bilame. Des essais complémentaires avec un interrupteur actionné au moyen d'un élément sensible réalisé par une pièce en matériau à mémoire de forme ont donnés également de bons résultats.

Comme représenté schématiquement sur la figure 1 l'élément sensible 12' à la température est agencé sur le chauffe-eau, ou bien selon un autre agencement, schématisé en traits interrompus, placé en sortie du chauffe-eau sur la goulotte d'arrosage.

Une cafetière comportant un tel dispositif de changement de la puissance fonctionne de la manière suivante.

Dès la fermeture de l'interrupteur 9, et du fait que l'élément de temporisation 12, dont le bilame est froid, occupe son état ouvert (figure 2), l'alimentation de la résistance chauffante 7 s'effectue au travers de la diode 13 et donc à demi-puissance.

Au cours de cette première phase de prétrempage, le débit d'eau chaude en sortie du chauffe-eau 2 est faible et permet à la mouture de gonfler et de macérer. La durée de cette phase de prétrempage a été déterminée de telle sorte que l'interrupteur de temporisation 12 passe à son état fermé au bout de deux à trois minutes. En cet état de fermeture, l'interrupteur de temporisation shunte la diode 13 et l'alimentation du chauffe-eau s'effectue à pleine puissance (par exemple 1200 watts) accélérant puis maintenant un fort débit d'eau pendant la phase d'infusion qui est généralement de l'ordre de cinq à six minutes. A la fin de cette phase d'infusion, le thermostat de régulation 10 remplit son rôle et maintient la plaque de support 6 du collecteur d'infusion 5 à une température dite de "maintien au chaud" de l'infusion.

Selon une autre variante de l'invention représentée à la figure 3, l'élément 12 sensible à la température est influencé par une résistance auxiliaire 14 montée en parallèle aux bornes de la résistance chauffante 7.

Ainsi, comme on le comprendra, à chaque fois que le thermostat de régulation 10 s'ouvre, l'élément sensible à la température n'est plus influencé par la résistance auxiliaire 14 et se refroidit de manière à faire occuper à l'élément de temporisation 12 sont état ouvert. Dès que le thermostat de régulation 10 se ferme, l'alimentation de la résistance chauffante 7 s'effectue au travers de la diode 13, donc à demi-puissance, réduisant ainsi sans inconvénient la température dit de "maintien au chaud". Grâce à cette disposition, non seulement on réduit la température des pièces métalliques du chauffe-eau 2, mais aussi la température des pièces en plastique de la cafetière, ce qui permet d'éviter une isolation thermique particulière et même de fabriquer lesdites pièces en un matériau plastique de faible prix tel que par exemple le polypropylène.

## Revendications

1. Cafetière ménagère comportant un réservoir d'eau froide (1) alimentant un chauffe-eau (2) du type à circulation dont la sortie est reliée à une goulotte d'arrosage (3) d'un filtre à café (4) disposé au-dessus d'un collecteur d'infusion (5) et un élément de temporisation (12) déterminant les phases de prétrempage et d'infusion par un état ouvert ou fermé, ledit chauffe-eau comprenant une résistance chauffante (7) dont le circuit d'alimentation est branché aux bornes (8) d'une source de tension alternative,
**caractérisée en ce que** le circuit d'alimentation de la résistance (7) comporte un dispositif (11) de changement de la puissance électrique fournie à ladite résistance chauffante (7) de manière à alimenter, en fonction de l'état ouvert ou fermé de l'élément de temporisation (12), ladite résistance, dans la phase de prétrempage, à une faible puissance pour obtenir un faible débit d'eau chaude, et dans la phase successive d'infusion, à une puissance supérieure pour obtenir un fort débit d'eau chaude.

2. Cafetière ménagère selon la revendication 1,
**caractérisée en ce que** le dispositif (11) de changement de la puissance comporte une diode (13) montée en série dans le circuit d'alimentation de la résistance chauffante (7), et l'élément de temporisation (12) est branché en parallèle aux bornes de la diode (13) et peut occuper, soit l'état ouvert pour lequel l'alimentation de la résistance (7) se fait à demi-puissance au travers de la diode (13), soit l'état fermé pour lequel il shunte ladite diode (13) et alimente la résistance (7) à pleine puissance.

3. Cafetière ménagère selon la revendication 1 ou 2,
**caractérisée en ce que** l'élément de temporisation (12) est un interrupteur commandé par un élément sensible à la température (12').

4. Cafetière ménagère selon la revendication 3,
**caractérisée en ce que** l'élément sensible à la température (12') est un bilame.

5. Cafetière ménagère selon la revendication 3,
**caractérisée en ce que** l'élément sensible à la température (12') est une pièce réalisée en un matériau à mémoire de forme.

6. Cafetière ménagère selon l'une quelconque des revendications 3 à 5,
**caractérisée en ce que** l'élément sensible à la température (12') est agencé sur le chauffe-eau (2).

7. Cafetière ménagère selon l'une quelconque des revendications 3 à 6,
**caractérisée en ce que** l'élément sensible à la température (12') est influencé par une résistance auxiliaire (14) montée en parallèle aux bornes de la résistance chauffante (7).

## Patentansprüche

1. Haushaltskaffeemaschine mit einem Kaltwasservorratsbehälter (1), der einen Heißwasserbereiter (2) vom Durchflußtyp speist, dessen Ausgang mit einem Aufgußohr (3) eines oberhalb eines Aufgußsammelbehälters (5) angeordneten Kaffeefilters (4) angeordnet ist, und mit einem Zeitüberwachungselement (12), das die Voranfeucht- und die Aufgießphase durch einen offenen oder geschlossenen Zustand bestimmt, wobei der Heißwasserbereiter einen Heizwiderstand (7) umfaßt, dessen Versorgungsstromkreis an die Anschlüsse (8) einer Wechselspannungsquelle angeschlossen ist,
**dadurch gekennzeichnet,** daß der Versorgungsstromkreis des Heizwiderstands (7) eine Anordnung (11) zum Ändern der elektrischen Leistung umfaßt, die an den Heizwiderstand (7) derart geliefert wird, daß abhängig von dem offenen oder geschlossenen Zustand des Zeitüberwachungselementes (12) der Heizwiderstand in der Voranfeuchtungsphase mit einer geringen Leistung zum Erhalten eines geringen Heißwasserdurchflusses, und in der darauffolgenden Filtratphase mit einer höheren Leistung zum Erhalten eines starken Heißwasserdurchflusses versorgt wird.

2. Haushaltskaffeemaschine gemäß Anspruch 1,
**dadurch gekennzeichnet,** daß die Vorrichtung (11) zum Ändern der Leistung eine Diode (13) umfaßt, die in dem Versorgungsstromkreis des Heizwiderstands (7) in Reihe angeordnet ist, und das Zeitüberwachungselement (12) an die Anschlüsse der Diode (13) parallel angeschlossen ist und entweder den offenen Zustand, in dem die Versorgung des Widerstandes (7) mit halber Leistung über die Diode (13) bewirkt wird, oder den geschlossenen Zustand, in dem es parallel zu der Diode (13) geschaltet ist und den Widerstand (7) mit voller Leistung versorgt, einnehmen kann.

3. Haushaltskaffeemaschine gemäß Anspruch 1 oder 2,
**dadurch gekennzeichnet,** daß das Zeitüberwachungselement (12) ein von einem temperaturempfindlichen Element (12') betätigter Schalter ist.

4. Haushaltskaffeemaschine gemäß Anspruch 3,
**dadurch gekennzeichnet,** daß das temperaturempfindliche Element (12') ein Bimetallstreifen ist.

5. Haushaltskaffeemaschine gemäß Anspruch 3,
**dadurch gekennzeichnet,** daß das temperaturempfindliche Element (12') ein Werkstück aus einem Material mit Formgedächtnis ist.

6. Haushaltskaffeemaschine gemäß einem der Patentansprüche 3 bis 5,
**dadurch gekennzeichnet,** daß das temperaturempfindliche Element (12') am Heißwasserbereiter (2) angeordnet ist.

7. Haushaltskaffeemaschine gemäß irgendeinem der Patentansprüche 3 bis 6,
**dadurch gekennzeichnet,** daß das temperaturempfindliche Element (12') durch einen Hilfswiderstand (14) beeinflußt wird, der parallel zu den Anschlüssen des Heizwiderstandes (7) angeordnet ist.

## Claims

1. A domestic coffee machine comprising a cold water reservoir (1) supplying a water heater (2) of the circulation type, the outlet of which is connected to a drip spout (3) of a coffee filter (4) disposed above an infusion collector (5) and a delay element (12) determining the presoaking and infusion phases by an open or closed state, said water heater comprising a heating resistor (7), the feed circuit of which is connected to the terminals (8) of an alternative voltage source,
**characterised in that** the feed circuit of the resistor (7) comprises a device (11) for changing the power supplied to the said heating resistor (7) in order to supply said resistor, as a function of the open or closed state of the delay element (12), with low power to obtain a low flow rate of hot water in the presoaking phase, and in the successive infusion phase, with greater power to obtain a high flow rate of hot water.

2. A domestic coffee machine according to Claim 1,
**characterised in that** the power changing device (11) comprises a diode (13) connected in series in the feed circuit of the heating resistor (7), and the delay element (12) is connected in parallel to the terminals of the diode (13) and can occupy either the open state, for which the power supply of the resistor (7) is at half-power through the diode (13), or the closed state, for which it bypasses said diode (13) and supplies the resistor (7) at full power.

3. A domestic coffee machine according to Claim 1 or 2,
**characterised in that** the delay element (12) is a switch controlled by a temperature-sensitive element (12').

4. A domestic coffee machine according to Claim 3,
**characterised in that** the temperature-sensitive element (12') is a bimetallic strip.

5. A domestic coffee machine according to Claim 3,
**characterised in that** the temperature-sensitive element (12') is a part made from a material having a shape memory.

6. A domestic coffee machine according to any one of Claims 3 to 5,
**characterised in that** the temperature-sensitive element (12') is disposed on the water heater (2).

7. A domestic coffee machine according to any one of Claims 3 to 6,
**characterised in that** the temperature-sensitive element (12') is influenced by an auxiliary resistor (14) connected in parallel to the terminals of the heating resistor (7).
